# EUROPEAN PATENT SPECIFICATION

(11) **EP 1 035 762 B1**
(45) Date of publication and mention of the grant of the patent: **06.08.2003**
(21) Application number: 98965217.7
(22) Date of filing: 01.12.1998
(51) Int. Cl.: A01F 25/13

(54) **AIRTIGHT PLASTIC SHEETING FOR COVERING PRODUCTS, PARTICULARLY ENSILED AGRICULTURAL PRODUCTS, LIKE CHOPPED SILAGE, OR SIMILAR**
LUFTDICHTE KUNSTSTOFFFOLIE ZUR PRODUKTENBEDECKUNG, BZW ANBAUPRODUKTEN, WIE ZERHACKTE SILOFUTTER ODER ÄHNLICHE
FEUILLE DE PLASTIQUE ETANCHE A L'AIR UTILISEE POUR COUVRIR DES PRODUITS, PLUS PARTICULIEREMENT DES PRODUITS AGRICOLES ENSILES TELS QUE DES PRODUITS ENSILES COUPES ET AUTRES

(30) Priority: 05.12.1997 IT SV970011 U
(43) Date of publication of application: 20.09.2000
(73) Proprietor: I.P.M. Industria Plastica Monregalese S.p.A., 12084 Mondovi (IT)
(72) Inventor: FORZANO, Bartolomeo, I-12084 Mondovi (IT); FERRERO, Gianfranco, I-12084 Mondovi (IT)
(74) Representative: Karaghiosoff, Giorgio Alessandro, Dott.
(86) International application number: PCT/EP98/07789
(87) International publication number: WO 99/029154

(56) References cited:
- WO-A-97/23125
- AU-B- 681 888
- DE-A- 1 810 755
- DE-A- 3 839 072
- US-A- 4 712 686
- DATABASE WPI Section Ch, Week 9332 Derwent Publications Ltd., London, GB; Class A17, AN 93-252300 XP002100276 & JP 05 169599 A (UBE IND LTD) , 9 July 1993
- PATENT ABSTRACTS OF JAPAN vol. 017, no. 589 (C-1124), 27 October 1993 & JP 05 176666 A (OKURA IND CO LTD), 20 July 1993

## Description

The present invention relates to the storage and protection of products, with particular reference to the ensilage of agricultural products, particularly chopped forage or other products for livestock and to a multi-layer plastic sheeting for covering products according to the preamble of claim 1.

Chopped forage or other agricultural products, particularly for livestock, are known to be ensiled at the green state in concrete pits or in stacks on the ground and compressed so as to let out as much air as possible, and then to be covered with plastic sheeting, in order to protect the ensiled material, as well as to prevent air penetration, so that harmful surface fermentation may be avoided and only the so-called low fermentation, caused by a lactic fermentation flora consisting of anaerobic microorganisms.

An airtight plastic sheeting for ensiled agricultural products in order to enable only a lactic fermentation of the ensiled product is known for example from the document DE 1810755 A. From the document JP 05169599 A is known a pasture packing film with a first layer formed from a composition prepared by mixing high-pressure low density polyethylene, carbon or TiO₂ and polybutene with linear low density polyethylene obtained by copolymerizing ethylene and α-olefin, and a second layer formed from a composition prepared by mixing polybutene with an ethylene/vinyl acetate copolymer.

Nevertheless, it has been noticed that covers used until present for these ensiled products do not satisfactorily fulfil their function when they are permeable to air, and particularly to oxygen, and that they do not prevent the ensiled material from fermenting or do not limit the fermentation of this material to the effect of anaerobic microorganisms only.

The invention aims at obviating this drawback and provides to this end a multi-layer plastic sheeting for covering products, particularly ensiled agricultural products, like chopped silage or similar, according to the preamble of claim 1 and further showing the combination of features of the characterizing part of claim 1.

The said at least one polyamide contained in the mixture of the insulating plastic layer may be nylon. According to a preferred embodiment of the sheeting according to the invention, the material used for the insulating plastic layer may contain, in addition to said at least one polyamide, a polymer of Ethyl Vinyl Alcohol (EVOH), Polyvinyl Alcohol (PVOH), Polyvinylidene Chloride (PVDAL), EVAL. In an other preferred embodiment the sheeting according to the invention may consist of a copolymer.

The sheeting according to the invention may consist of two or more layers, for example coextruded layers, whereof at least one layer or possibly even more consist each of one insulating airtight plastic layer. In the case of a multi-layer sheet with at least two insulating layers, these insulating layers may be made of the same plastic material or of different plastic materials, all being airtight.

The above disclosure clearly shows that the cover for ensiled agricultural products according to the invention does not allow - thanks to its insulating layer/s - air, and therefore oxygen, to penetrate through the cover, thus preventing the fermentation of the ensiled product, or limiting it to lactic fermentation caused by anaerobic microorganisms.

Naturally, the invention is not intended to be restricted to the application examples described hereinbefore, but also comprises applications not pertaining to agriculture.

Thus for example the above disclosed sheeting may be applied for so called round bags or for so called silage bags.

## Claims

1. Multi-layer plastic sheeting for covering products, particularly ensiled agricultural products, like chopped silage, or similar, **characterized in that** it has at least one insulating layer made of an insulating plastic air- and particularly oxygen-tight material, for preventing the fermentation of the ensiled material or for limiting it to a lactic fermentation caused by anaerobic microorganisms, the at least one insulating layer being made of at least one polyamide or mixtures thereof with several polymers.

2. Sheeting as claimed in claim 1, **characterized by** at least one insulating layer made of polyamide, of a polymer of Ethyl Vinyl Alcohol (EVOH), Polyvinyl Alcohol (PVOH), Polyvinylidene Chloride (ANAL), EVAL, or similar, having insulating functions.

3. Sheeting as claimed in claim 1, **characterized by** at least one insulating layer made of an airtight copolymer.

4. Sheeting as claimed in claim 1, **characterized by** at least one insulating layer made of a mixture of two or more polymers, particularly of a mixture comprising at least one polyamide.

5. Sheeting as claimed in claim 4, **characterized in that** the polyamide preferably covers 30% to 70% of the mixture.

6. Sheeting as claimed in one or more of claims 1 to 5, **characterized in that** it is a multi-layer sheet, wherein one or more layers are provided as insulating layers.

7. Sheeting as claimed in one or more of claims 1 to 6, **characterized in that** it protects from air, oxygen or other gases for disinfestation, preservation from parasites, insects, fungi and else even in fields not relating to ensiled or agricultural products.

8. Airtight plastic sheeting for covering products, particularly ensiled agricultural products, like chopped silage, or similar, consisting of a single- or multi-layer air- and particularly oxygen-tight plastic sheet, according to one or more of the preceding claims charaterised in that it is applied in packaging agricultural products, by forming round bags or silage bags.

## Patentansprüche

1. Mehrschichtige Kunststofffolienware zur Abdeckung von Produkten, insbesondere landwirtschaftlichen Siloprodukten, wie gehäckselte Silage, oder ähnlichen Produkten, **dadurch gekennzeichnet, dass** die Folie mindestens eine Isolierschicht umfasst, die aus einem isolierenden luft- und insbesondere sauerstoffdichten Kunststoffmaterial besteht und dazu dient, das Gären des Silomaterials zu verhindern oder auf eine durch anaerobe Mikroorganismen verursachte Milchsäuregärung zu beschränken, wobei die mindestens eine Isolierschicht aus mindestens einem Polyamid oder aus Mischungen des- oder derselben mit mehreren Polymeren besteht.

2. Folienware nach Anspruch 1, **dadurch gekennzeichnet, dass** mindestens eine aus Polyamid, einem Ethylvinylalkohol (EVOH)-, Polyvinylalkohol (PVOH)-, Polyvinylidenchlorid (PVAL)-, EVAL-Polymer oder einem ähnlichem Material hergestellte Isolierschicht Isolierfunktionen besitzt.

3. Folienware nach Anspruch 1, **dadurch gekennzeichnet, dass** mindestens eine Isolierschicht aus einem luftdichten Copolymer hergestellt ist.

4. Folienware nach Anspruch 1, **dadurch gekennzeichnet, dass** mindestens eine Isolierschicht aus einer Mischung von zwei oder mehr Polymeren, insbesondere aus einer Mischung, die mindestens ein Polyamid umfässt, hergestellt ist.

5. Folienware nach Anspruch 4, **dadurch gekennzeichnet, dass** das Polyamid vorzugsweise einen Anteil von 30% bis 70% der Mischung ausmacht.

6. Folienware nach einem oder mehreren der Ansprüche 1 bis 5, **dadurch gekennzeichnet, dass** es sich um eine mehrschichtige Folie handelt, bei der eine oder mehrere Schichten als Isolierschichten ausgeführt sind.

7. Folienware nach einem oder mehreren der Ansprüche 1 bis 6, **dadurch gekennzeichnet, dass** sie einen Schutz vor Luft, Sauerstoff oder anderen Gasen zur Ungezieferbekämpfung, einen Schutz vor Parasitenbefall, Insekten, Pilzen und anderem auch in Bereichen bietet, die nicht mit Silo- oder landwirtschaftlichen Produkten verwandt sind.

8. Luftdichte Kunststofffolienware zur Abdeckung von Produkten, insbesondere landwirtschaftlichen Siloprodukten, wie gehäckselte Silage, oder ähnlichen Produkten, bestehend aus einer ein- oder mehrschichtigen luft- und insbesondere sauerstoffdichten Kunststofffolie nach einem oder mehreren der vorhergehenden Ansprüche, **dadurch gekennzeichnet, dass** die Folie zur Verpackung von landwirtschaftlichen Produkten verwendet wird, indem aus ihr runde Säcke oder Silagesäcke gebildet werden.

## Revendications

1. Feuille plastique multicouche pour couvrir des produits, plus particulièrement des produits agricoles ensilés, tels que les produits ensilés coupés et/ou similaires, **caractérisée en ce qu'**elle comprend au moins une couche isolante formée d'un plastique isolant à l'air et plus particulièrement d'un matériau étanche à l'oxygène pour empêcher la fermentation du matériau ensilé ou pour limiter la fermentation lactique causée par les microorganismes anaérobie, ladite feuille isolante étant formée d'au moins un polyamide ou un mélange de polyamide avec plusieurs polymères.

2. Feuille selon la revendication 1, **caractérisée en ce que** la feuille isolante est formée de polyamide, de polymère Ethyl Vinyl Alcool (EVOH), d'alcool polyvinylique (PVOH), de chlorure de polyvinylidène (PVAL), d'EVAL ou similaire ayant des fonctions étanches.

3. Feuille selon la revendication 1, **caractérisée en ce que** la feuille étanche est formée d'un copolymère étanche à l'air.

4. Feuille selon la revendication 1, **caractérisée en ce que** la feuille isolante est formée d'un mélange de deux ou plusieurs polymères, et plus particulièrement un mélange comprenant au moins un polyamide.

5. Feuille selon la revendication 4, **caractérisée en ce que** le polyamide représente entre 30 et 70 % du mélange.

6. Feuille selon l'une des revendications 1 à 5, **caractérisée en ce qu'**il s'agit d'une feuille multicouche dans laquelle au moins une ou plusieurs feuilles correspondent à des feuilles étanches.

7. Feuille selon l'une des revendications 1 à 6, **caractérisée en ce qu'**elle protège de l'air, de l'oxygène et des autres gaz pour la désinfection, la conservation, des parasites, des insectes, des champignons et autres, même dans les domaines ne se rapportant pas aux produits ensilés ou agricoles.

8. Feuille de plastique étanche à l'air pour couvrir des produits, plus particulièrement des produits agricoles ensilés, tels que des produits ensilés coupés ou similaires, consistant en une feuille simple ou multicouche étanche à l'air et plus particulièrement à l'oxygène selon l'une ou plusieurs des revendications précédentes, **caractérisée en ce qu'**elle est appliquée sur des produits d'emballages agricoles par formation de sacs ronds ou de sacs d'ensilage.
